# EUROPÄISCHE PATENTSCHRIFT

(11) **EP 2 468 571 B1**
(45) Veröffentlichungstag und Bekanntmachung des Hinweises auf die Patenterteilung: **08.01.2014**
(21) Anmeldenummer: 11187994.6
(22) Anmeldetag: 07.11.2011
(51) Int. Cl.: B60R 1/00, B60R 1/04, B60R 1/12

(54) **Innenrückspiegel mit Bildanzeige bei Spurwechsel**
Cabin rear-view mirror with display screen for lane changing
Rétroviseur intérieur doté d'un affichage d'image lors d'un changement de voie

(30) Priorität: 23.12.2010 DE 102010064122
(43) Veröffentlichungstag der Anmeldung: 27.06.2012
(73) Patentinhaber: Robert Bosch GmbH, 70442 Stuttgart (DE)
(72) Erfinder: Donath, Ralf, 71254 Ditzingen (DE); Nordbruch, Stefan, 70806 Kornwestheim (DE)

(56) Entgegenhaltungen:
- WO-A1-02/18174
- US-A1- 2008 231 703
- US-A1- 2010 201 816

## Beschreibung

Die vorliegende Erfindung betrifft einen Innenrückspiegel, ein Fahrassistenzsystem und ein Fahrassistenzverfahren.

### Stand der Technik

Der Spurwechsel ist für viele Fahrer insbesondere beim Überholen und Einscheren eine schwierige Situation und führt häufig zu Unfällen, da viele Fahrer zu spät oder gar nicht auf den seitlichen und rückwärtigen Verkehr schauen.

Eine technische Hilfe für diese Situationen beschreibt zum Beispiel die gattungsbildende US 2008/231703 A1, welche eine Bereichsüberwachung für ein Fahrzeug mit einer Kamera und einer im Rückspiegel integrierten Anzeigeeinheit offenbart. Der Rückspiegel ist mit zwei Umfeld-Anzeigeeinheiten versehen, welche das über eine Kamera aufgenommene Bild wiedergeben. Die im Rückspiegel integrierten Display-Einheiten sind dabei so angeordnet, dass sie in der Art vom Fahrersitz her einsehbar sind, dass ein intuitives Erkennen der anderen Fahrzeuge durch die Display-Darstellungen gewährleistet ist.

Eine weitere Möglichkeit bietet die US2010/201816 A1, in welcher ein Fahrzeug Rückspiegel-System mit Mehrfach-Display und einem elektrochromen Glaselement beschrieben ist, wobei die Liquid Crystal Displays (LCDs) hinter dem EC-Element angeordnet sind.

### Offenbarung der Erfindung

Gegenstand der vorliegenden Erfindung ist ein Innenrückspiegel für ein Fahrzeug, wobei der Innenrückspiegel
- mit mindestens einem Umgebungserfassungssensor zum Erfassen von Umgebungsdaten über zumindest einen Teil der seitlichen und/oder rückwärtigen Umgebung des Fahrzeugs und
- mit mindestens einen Spurwechseldetektor zum Detektieren eines Spurwechsels des Fahrzeugs, insbesondere des Beginns eines Spurwechsels des Fahrzeugs,
signaltechnisch verbindbar oder verbunden ist, dadurch gekennzeichnet,
dass der Innenrückspiegel dazu ausgelegt ist bei einem Spurwechsel einen oder mehrere Anzeigeabschnitte und keinen Spiegelabschnitt aufzuweisen, sodass die Anzeigeabschnitte die Spiegelfunktion ubernehmen, und ab dem Beginn eines Spurwechsels, mindestens ein auf erfassten Umgebungsdaten basierendes Abbild zumindest eines Teils der seitlichen und/oder rückwärtigen Umgebung des Fahrzeugs anzuzeigen.

Der erfindungsgemäße Innenrückspiegel hat den Vorteil, dass dem Fahrer beim Spurwechsel automatisch zusätzliche Informationen durch den Innenrückspiegel zur Verfügung gestellt werden. So kann vorteilhafterweise die Unfallgefahr, insbesondere beim Überholen und Einscheren, verringert werden.

Zur Anzeige des Umgebungsabbildes umfasst der Innenrückspiegel mindestens einen Anzeigeabschnitt. Dabei ist der Innenrückspiegel vorzugsweise zwischen der Wiedergabe eines Spiegelbildes und der Anzeige mindestens eines Umgebungsabbildes umschaltbar.

Im Rahmen einer Ausführungsform umfasst der Innenrückspiegel mindestens einen Spiegelabschnitt, insbesondere zur Wiedergabe eines Spiegelbildes der rückwärtigen und/oder seitlichen Fahrzeugumgebung.

Im Rahmen einer weiteren Ausführungsform umfasst der Innenrückspiegel mindestens einen Anzeigeabschnitt zum Anzeigen eines Abbildes der seitlichen Fahrzeugumgebung. Insbesondere kann dabei der Innenrückspiegel bei einem Spurwechsel nach links einen Anzeigeabschnitt zum Anzeigen eines Abbildes der Fahrzeugumgebung auf der linken Seite des Fahrzeugs und bei einem Spurwechsel nach rechts einen Anzeigeabschnitt zum Anzeigen eines Abbildes der Fahrzeugumgebung auf der rechten Seite des Fahrzeugs umfassen. Das Abbild der seitlichen Fahrzeugumgebung kann beispielsweise auf Umgebungsdaten basieren, welche von mindestens einem seitlichen Umgebungserfassungssensor, beispielsweise einer Seitenkamera oder einem sonstigen Seitensensor, zum Beispiel auf der linken oder rechten Seite des Fahrzeugs, erfasst werden.

Im Rahmen einer weiteren Ausführungsform umfasst der Innenrückspiegel mindestens einen Anzeigeabschnitt zum Anzeigen eines Abbildes der rückwärtigen Fahrzeugumgebung. Das Abbild der rückwärtigen Fahrzeugumgebung kann beispielsweise auf Umgebungsdaten basieren, welche von mindestens einem rückwärtigen Umgebungserfassungssensor, beispielsweise einer Rückfahrkamera oder einem sonstigen Rückfahrsensor, erfasst werden. Die seitliche Fahrzeugumgebung kann dabei gleichzeitig durch einen Spiegelabschnitt wiedergegeben werden.

Vorzugsweise umfasst der Innenrückspiegel (gleichzeitig) mindestens zwei Anzeigeabschnitte zum Anzeigen von Abbildern unterschiedlicher Bereiche der Fahrzeugumgebung.

Im Rahmen der Erfindung weist der Innenspiegel beim Spurwechsel einen oder mehrere Anzeigeabschnitte und keinen Spiegelabschnitt auf. Die Anzeigeabschnitte übernehmen dabei die Spiegelfunktion. Das Anzeigen der Fahrzeugumgebung durch Anzeigeabschnitte hat verglichen mit einer Wiedergabe durch einen Spiegel den Vorteil, dass die Fahrzeugumgebung durch eine Anzeige, insbesondere in Kombination mit einer Bildverarbeitung und/oder im Fall einer Sichtbehinderung durch den Spiegel, besser dargestellt werden kann als dies mit einer Spiegelfunktion möglich ist. Nach dem Spurwechsel kann der Innenspiegel wieder auf die Wedergabe eines Spiegelabschnittes umschaltbar sein.

Im Rahmen einer weiteren Ausführungsform umfasst der Innenrückspiegel gleichzeitig mindestens einen Anzeigeabschnitt zum Anzeigen eines Abbildes der seitlichen Fahrzeugumgebung und mindestens einen Anzeigeabschnitt zum Anzeigen eines Abbildes der rückwärtigen Fahrzeugumgebung.

Der Spurwechseldetektor kann insbesondere ein Überhol- und/oder Einschervorgangdetektor zum Detektieren eines Überhol- und/oder Einschervorgangs sein.

Im Rahmen einer weiteren Ausführungsform umfasst oder ist der Spurwechseldetektor ein Blinker-Bedienelement, insbesondere das Blinker-Bedienelement, zum Beispiel der Blinkerhebel, des Fahrzeugs. Da das Blinker-Bedienelement meist beim Beginn eines Spurwechselns, beispielsweise eines Überhol- und/oder Einschervorgangs betätigt wird, kann der Spurwechseldetektor so auf einfache Weise realisiert werden.

Es ist jedoch ebenso möglich den Spurwechseldetektor anderweitig auch ohne Involvierung des Blinker-Bedienelementes zu realisieren.

Als Umgebungserfassungssensoren sind beispielsweise Kameras, beispielsweise für sichtbares Licht, IR- und/oder UV-Strahlung, sowie Sonar/Ultraschall-, Lidar- und/oder Radarsensoren geeignet.

Im einfachsten Fall kann der Innenrückspiegel ein von einer Kamera für sichtbares Licht aufgenommenes Bild der Fahrzeugumgebung teilweise oder vollständig wiedergeben.

Es ist jedoch ebenso möglich, dass eine Bildverarbeitungseinrichtung ein durch eine Kamera für sichtbares Licht aufgenommenes Bild der Fahrzeugumgebung teilweise oder vollständig aufbereitet und der Innenrückspiegel das aufbereitete Abbild der Fahrzeugumgebung teilweise oder vollständig wieder gibt.

Im Rahmen einer weiteren Ausführungsform ist der Innenrückspiegel daher mit einer Bildverarbeitungseinrichtung signaltechnisch verbindbar oder verbunden.

Im Rahmen einer weiteren Ausführungsform ist die Bildverarbeitungseinrichtung dazu ausgelegt, aus erfassten Umgebungsdaten, insbesondere von mindestens einer Kamera für IR- und/oder UV-Strahlung und/oder von mindestens einem Sonar/Ultraschall-, Lidar- und/oder Radarsensor, mindestens ein durch den Innenrückspiegel anzeigbares Abbild, insbesondere in dem für den Menschen sichtbaren Bereich der elektromagnetischen Strahlung, zu berechnen und über den Innenrückspiegel auszugeben. Hierzu sind beispielsweise Bildverarbeitungseinrichtungen geeignet, welche in Systemen eingesetzt werden, die unter dem Handelsnamen Night Vision von der Robert Bosch GmbH, Deutschland, vertrieben werden. So können dem Fahrer vorteilhafterweise Informationen zur

Verfügung gestellt werden, welche dem Fahrer allein mit den menschlichen Sinnen nicht zur Verfügung stünden.

Die Bildverarbeitungseinrichtung kann sowohl in den Innenrückspiegel als auch in ein anderes Fahrzeugsystem, beispielsweise den Umgebungserfassungssensor, integriert sein.

Im Rahmen einer weiteren Ausführungsform ist die Bildverarbeitungseinrichtung in den Innenrückspiegel integriert. Dies hat ebenfalls den Vorteil, dass Fahrzeuge auf einfache Weise mit dem erfindungsgemäßen Innenrückspiegel nachgerüstet werden können.

Hinsichtlich weiterer Vorteile und Merkmale wird hiermit explizit auf die Erläuterungen im Zusammenhang mit dem erfindungsgemäßen Fahrassistenzsystem, erfindungsgemäßen Fahrassistenzverfahren sowie der Figurenbeschreibung verwiesen.

Ein weiterer Gegenstand der vorliegenden Erfindung ist ein Fahrassistenzsystem für ein Fahrzeug, welches einen erfindungsgemäßen Innenrückspiegel, mindestens einen Umgebungserfassungssensor zum Erfassen von Umgebungsdaten über zumindest einen Teil der seitlichen und/oder rückwärtigen Umgebung des Fahrzeugs und mindestens einem Spurwechseldetektor zum Detektieren eines Spurwechsels des Fahrzeugs, insbesondere des Beginns eines Spurwechsels des Fahrzeugs, umfasst.

Hinsichtlich weiterer Vorteile und Merkmale wird hiermit explizit auf die Erläuterungen im Zusammenhang mit dem erfindungsgemäßen Innenrückspiegel, erfindungsgemäßen Fahrassistenzverfahren sowie der Figurenbeschreibung verwiesen.

Ferner betrifft die vorliegende Erfindung ein Fahrassistenzverfahren, mit einem erfindungsgemäßen Innenrückspiegel oder Fahrassistenzsystem, umfassend die Verfahrensschritte:
- Detektieren ob ein Spurwechsel, insbesondere ein Überhol- und/oder Einschervorgang, des Fahrzeugs vorliegt, insbesondere beginnt,
- Anzeigen, insbesondere automatisches Anzeigen, mindestens eines auf erfassten Umgebungsdaten basierenden Abbildes zumindest eines Teils der seitlichen und/oder rückwärtigen Umgebung des Fahrzeugs durch den Innenrückspiegel, wenn ein Spurwechsel, insbesondere ein Überhol- und/oder Einschervorgang, des Fahrzeugs vorliegt, insbesondere beginnt.

Hinsichtlich weiterer Vorteile und Merkmale wird hiermit explizit auf die Erläuterungen im Zusammenhang mit dem erfindungsgemäßen Innenrückspiegel, erfindungsgemäßen Fahrassistenzsystem sowie der Figurenbeschreibung verwiesen.

### Zeichnungen und Beispiele

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Draufsicht auf eine erste Ausführungsform eines erfindungsgemäßen Innenrückspiegels bei einem Spurwechsel nach links;
- Fig. 2: eine schematische Draufsicht auf die in Fig. 1 gezeigte Ausführungsform bei einem Spurwechsel nach rechts;
- Fig. 3: eine schematische Draufsicht auf eine zweite Ausführungsform eines erfindungsgemäßen Innenrückspiegels bei einem Spurwechsel nach links; und
- Fig. 4: eine schematische Draufsicht auf die in Fig. 3 gezeigte Ausführungsform bei einem Spurwechsel nach rechts.

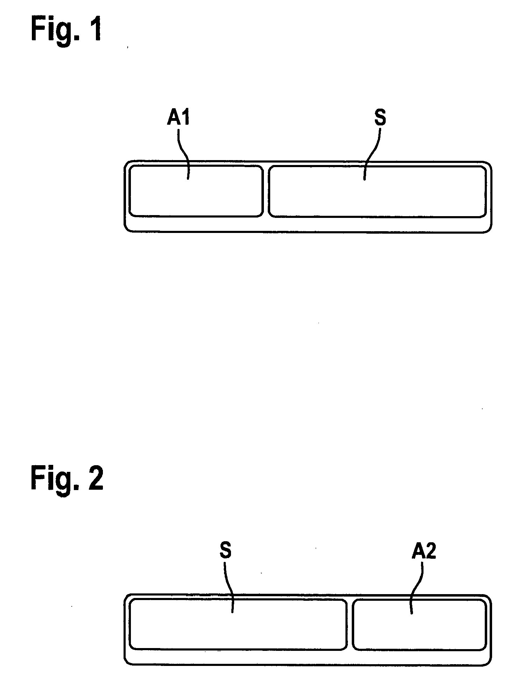

Figur 1 zeigt eine erste Ausführungsform eines erfindungsgemäßen Innenrückspiegels während eines Spurwechsels nach links, beispielsweise bei einem Einschervorgang oder bei einem Überholvorgang im Rechtsverkehr oder bei einem Wiedereinschervorgang nach erfolgtem Überholen im Linksverkehr. Figur 1 zeigt, dass der Innenspiegel dabei einen Anzeigeabschnitt A1 zum Anzeigen eines Abbildes der Fahrzeugumgebung auf der linken Seite des Fahrzeugs und einen Spiegelabschnitt S umfasst. Das Abbild der seitlichen Fahrzeugumgebung kann dabei beispielsweise auf Umgebungsdaten basieren, welche von einer oder mehren Seitenkameras erfasst werden.

Figur 2 zeigt die in Figur 1 gezeigte, erste Ausführungsform eines erfindungsgemäßen Innenrückspiegels bei einem Spurwechsel nach rechts, beispielsweise bei einem Einschervorgang oder bei einem Überholvorgang im Linksverkehr oder einem Wiedereinschervorgang nach erfolgtem Überholen im Rechtsverkehr. Figur 2 zeigt, dass der Innenspiegel dabei einen Anzeigeabschnitt A2 zum Anzeigen eines Abbildes der Fahrzeugumgebung auf der rechten Seite des Fahrzeugs und einen Spiegelabschnitt S umfasst.

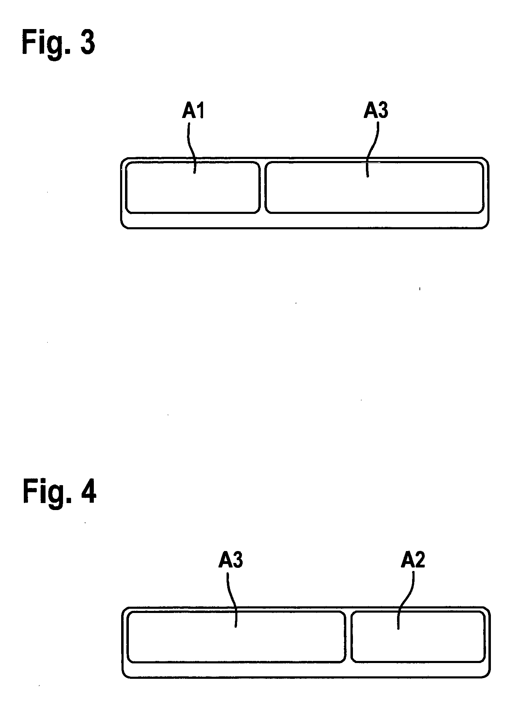

Die Figur 3 und 4 zeigen eine zweite Ausführungsform eines erfindungsgemäßen Innenrückspiegels während eines Spurwechsels nach links beziehungsweise nach rechts. Die in den Figuren 3 und 4 gezeigte zweite Ausführungsform unterscheidet sich im Wesentlichen dadurch von der, in den Figuren 1 und 2 gezeigten, ersten Ausführungsform, dass der Innenspiegel anstelle des Spiegelabschnitts S einen Anzeigeabschnitt A3 umfasst, welcher dazu ausgebildet ist gleichzeitig mit einem der seitlichen Anzeigeabschnitt A1, A2 ein Abbild der rückwärtigen Fahrzeugumgebung anzuzeigen.

## Patentansprüche

1. Innenrückspiegel für ein Fahrzeug,
wobei der Innenrückspiegel
- mit mindestens einem Umgebungserfassungssensor zum Erfassen von Umgebungsdaten über zumindest einen Teil der seitlichen und/oder rückwärtigen Umgebung des Fahrzeugs und
- mit mindestens einen Spurwechseldetektor zum Detektieren eines Spurwechsels des Fahrzeugs, insbesondere des Beginns eines Spurwechsels des Fahrzeugs,
signaltechnisch verbindbar, **dadurch gekennzeichnet,**
**dass** der Innenrückspiegel dazu ausgelegt ist bei einem Spurwechsel einen oder mehrere Anzeigeabschnitte und keinen Spiegelabschnitt aufzuweisen, sodass die Anzeigeabschnitte die Spiegelfunktion übernehmen, und ab dem Beginn eines Spurwechsels, mindestens ein auf erfassten Umgebungsdaten basierendes Abbild zumindest eines Teils der seitlichen und/oder rückwärtigen Umgebung des Fahrzeugs anzuzeigen.

2. Innenrückspiegel nach Anspruch 1, wobei der Spurwechseldetektor ein Blinker-Bedienelement umfasst.

3. Innenrückspiegel nach Anspruch 1 oder 2, wobei der Innenrückspiegel mit einer Bildverarbeitungseinrichtung signaltechnisch verbindbar ist, wobei die Bildverarbeitungseinrichtung dazu ausgelegt ist, aus erfassten Umgebungsdaten, insbesondere von mindestens einer Kamera für IR- und/oder UV-Strahlung und/oder von mindestens einem Sonar/Ultraschall-, Lidar-und/oder Radarsensor, mindestens ein durch den Innenrückspiegel anzeigbares Abbild, insbesondere in dem für den Menschen sichtbaren Bereich der elektromagnetischen Strahlung, zu berechnen und über den Innenrückspiegel auszugeben

4. Innenrückspiegel nach einem der Ansprüche 1 bis 3, wobei die Bildverarbeitungseinrichtung in den Innenrückspiegel integriert ist.

5. Innenrückspiegel nach einem der Ansprüche 1 bis 4, wobei der Innenrückspiegel mindestens einen Spiegelabschnitt (S) umfasst.

6. Innenrückspiegel nach einem der Ansprüche 1 bis 5, wobei der Innenrückspiegel mindestens einen Anzeigeabschnitt (A1, A2) zum Anzeigen eines Abbildes der seitlichen Fahrzeugumgebung umfasst.

7. Innenrückspiegel nach einem der Ansprüche 1 bis 6, wobei der Innenrückspiegel mindestens einen Anzeigeabschnitt (A3) zum Anzeigen eines Abbildes der rückwärtigen Fahrzeugumgebung umfasst.

8. Innenrückspiegel nach einem der Ansprüche 1 bis 7, wobei der Innenrückspiegel gleichzeitig mindestens einen Anzeigeabschnitt (A1, A3) zum Anzeigen eines Abbildes der seitlichen Fahrzeugumgebung und mindestens einen Anzeigeabschnitt (A3) oder Spiegelabschnitt (S) zum Anzeigen eines Abbildes der rückwärtigen Fahrzeugumgebung umfasst.

9. Fahrassistenzsystem für ein Fahrzeug, umfassend
- einen Innenrückspiegel nach einem der Ansprüche 1 bis 8,
- mindestens einen Umgebungserfassungssensor zum Erfassen von Umgebungsdaten über zumindest einen Teil der seitlichen und/oder rückwärtigen Umgebung des Fahrzeugs und
- mindestens einem Spurwechseldetektor zum Detektieren eines Spurwechsels des Fahrzeugs, insbesondere des Beginns eines Spurwechsels des Fahrzeugs.

10. Fahrassistenzverfahren, mit einem Innenrückspiegel nach einem der Ansprüche 1 bis 8 oder einem Fahrassistenzsystem nach Anspruch 9, umfassend die Verfahrensschritte:
- Detektieren ob ein Spurwechsel, insbesondere ein Überhol- und/oder Einschervorgang, des Fahrzeugs vorliegt, insbesondere beginnt,
- Anzeigen mindestens eines auf erfassten Umgebungsdaten basierenden Abbildes zumindest eines Teils der seitlichen und/oder rückwärtigen Umgebung des Fahrzeugs durch den Innenrückspiegel, wenn ein Spurwechsel, insbesondere ein Überhol- und/oder Einschervorgang, des Fahrzeugs vorliegt, insbesondere beginnt.

## Claims

1. Cabin rear-view mirror for a vehicle,
wherein the cabin rear-view mirror can be connected by signalling technology
- to at least one surroundings-sensing sensor for acquiring data on the surroundings on at least a portion of the surroundings of the vehicle to the side and/or to the rear, and
- to at least one lane change detector for detecting a lane change of the vehicle, in particular the start of a lane change of the vehicle,
**characterized**
**in that** the cabin rear-view mirror is configured, in the event of a lane change, to have one or more display sections and no mirror section so that the display sections assume the mirror function, and from the start of a lane change to display at least one image, based on detected data on the surroundings, for at least a portion of the surroundings of the vehicle to the side and/or to the rear.

2. Cabin rear-view mirror according to Claim 1, wherein the lane change detector is a flashing direction indicator light control element.

3. Cabin rear-view mirror according to Claim 1 or 2, wherein the cabin rear-view mirror can be connected in terms of signalling technology to an image processing device, wherein the image processing device is configured to calculate from detected data on the surroundings, in particular from at least one camera for IR radiation and/or UV radiation and/or from at least one sonar/ultrasonic sensor or lidar and/or radar sensor, at least one image which can be displayed by the cabin rear-view mirror, in particular in the region of electromagnetic radiation which is visible to humans, and to output said image via the cabin rear-view mirror.

4. Cabin rear-view mirror according to one of Claims 1 to 3, wherein the image processing device is integrated into the cabin rear-view mirror.

5. Cabin rear-view mirror according to one of Claims 1 to 4, wherein the cabin rear-view mirror comprises at least one mirror section (S).

6. Cabin rear-view mirror according to one of Claims 1 to 5, wherein the cabin rear-view mirror comprises at least one display section (A1, A2) for displaying an image of the surroundings to the side of the vehicle.

7. Cabin rear-view mirror according to one of Claims 1 to 6, wherein the cabin rear-view mirror comprises at least one display section (A3) for displaying an image of the surroundings to the rear of the vehicle.

8. Cabin rear-view mirror according to one of Claims 1 to 7, wherein the cabin rear-view mirror simultaneously comprises at least one display section (A1, A2) for displaying an image of the surroundings to the side of the vehicle and at least one display section (A3) or mirror section (S) for displaying an image of the surroundings to the rear of the vehicle.

9. Driving assistance system for a vehicle, comprising
- a cabin rear-view mirror according to one of Claims 1 to 8,
- at least one surroundings-sensing sensor for acquiring data on the surroundings on at least a portion of the surroundings of the vehicle to the side and/or to the rear, and
- at least one lane change detector for detecting a lane change of the vehicle, in particular the start of a lane change of the vehicle.

10. Driving assistance method, having a cabin rear-view mirror according to one of Claims 1 to 8 or a driving assistance system according to Claim 9, comprising the method steps:
- detecting whether a lane change, in particular an overtaking manoeuvre and/or cutting-in manoeuvre of the vehicle is occurring, in particular is starting,
- displaying at least one image, based on acquired data on the surroundings, of at least a portion of the surroundings of the vehicle to the side and/or to the rear by means of the cabin rear-view mirror if a lane change, in particular an overtaking manoeuvre and/or cutting-in manoeuvre, of the vehicle is occurring, in particular is starting.

## Revendications

1. Rétroviseur intérieur pour véhicule, le rétroviseur intérieur pouvant être relié de manière à transmettre des signaux
- à au moins un capteur de saisie de l'environnement qui saisit des données de l'environnement sur au moins une partie de l'environnement latéral et/ou de l'environnement arrière du véhicule et
- à au moins un détecteur de changement de bande de circulation qui détecte un changement de bande de circulation du véhicule, en particulier au début d'un changement de bande de circulation du véhicule, **caractérisé en ce que**
le rétroviseur intérieur est conçu pour présenter lors d'un changement de bande de circulation une ou plusieurs parties d'affichage et aucune partie réfléchissante, de telle sorte que les parties d'affichage assurent la fonction réfléchissante et pour afficher au début d'un changement de bande de circulation au moins une image d'au moins une partie de l'environnement latéral et/ou de l'environnement arrière du véhicule sur base des données d'environnement qui ont été saisies.

2. Rétroviseur intérieur selon la revendication 1, dans lequel le détecteur de changement de bande de circulation comporte un élément d'actionnement des clignotants.

3. Rétroviseur intérieur selon les revendications 1 ou 2, dans lequel le rétroviseur intérieur peut être relié de manière à transmettre des signaux à un dispositif de traitement d'image, le dispositif de traitement d'image étant conçu pour calculer à partir des données d'environnement qui ont été saisies, en particulier par au moins une caméra travaillant en rayonnement IR et/ou UV et/ou d'au moins un capteur sonar à ultrasons, lidar ou radar, au moins une image qui peut être présentée sur le rétroviseur intérieur, en particulier dans la plage du rayonnement électromagnétique visible par l'homme, et pour l'afficher par l'intermédiaire du rétroviseur intérieur.

4. Rétroviseur intérieur selon l'une des revendications 1 à 3, dans lequel le dispositif de traitement d'image est intégré dans le rétroviseur intérieur.

5. Rétroviseur intérieur selon l'une des revendications 1 à 4, dans lequel le rétroviseur intérieur comporte au moins une partie réfléchissante (S).

6. Rétroviseur intérieur selon l'une des revendications 1 à 5, dans lequel le rétroviseur intérieur comporte au moins une partie d'affichage (A1, A2) qui affiche une image de l'environnement latéral du véhicule.

7. Rétroviseur intérieur selon l'une des revendications 1 à 6, dans lequel le rétroviseur intérieur présente au moins une partie d'affichage (A3) qui affiche une image de l'environnement arrière du véhicule.

8. Rétroviseur intérieur selon l'une des revendications 1 à 7, dans lequel le rétroviseur intérieur présente simultanément au moins une partie d'affichage (A1, A2) qui affiche une image de l'environnement latéral du véhicule et au moins une partie d'affichage (A3) ou partie réfléchissante (S) qui présentent une image de l'environnement arrière du. véhicule.

9. Système d'assistance à la conduite d'un véhicule, comprenant :
- un rétroviseur intérieur selon l'une des revendications 1 à 8,
- au moins un capteur de saisie de l'environnement qui saisit des données d'environnement sur au moins une partie de l'environnement latéral et/ou de l'environnement arrière du véhicule et
- au moins un détecteur de changement de bande de circulation qui détecte un changement de bande de circulation du véhicule et en particulier le début d'un changement de bande de circulation du véhicule.

10. Procédé d'assistance à la conduite à l'aide d'un rétroviseur intérieur selon l'une des revendications 1 à 8 ou d'un système d'assistance à la conduite selon la revendication 9 et comportant les étapes suivantes :
- détecter si un changement de bande de circulation, en particulier une opération de dépassement et/ou de retrait du véhicule est en cours et en particulier commence,
- sur base de données d'environnement qui ont été saisies, afficher au moins une image d'au moins une partie de l'environnement latéral et/ou de l'environnement arrière du véhicule sur le rétroviseur intérieur si un changement de bande de circulation et en particulier une opération de dépassement et/ou de retrait du véhicule ont cours et en particulier commencent.
